# EUROPEAN PATENT SPECIFICATION

(11) **EP 2 930 883 B1**
(45) Date of publication and mention of the grant of the patent: **29.11.2017**
(21) Application number: 14163710.8
(22) Date of filing: 07.04.2014
(51) Int. Cl.: H04L 12/24, H04L 29/08

(54) **Method for the implementation of network functions virtualization of a telecommunications network providing communication services to subscribers, telecommunications network, program and computer program product**
Verfahren zur Implementierung von Netzwerkfunktionsvirtualisierung eines Telekommunikationsnetzes mittels Bereitstellung von Kommunikationsdiensten an Teilnehmer, Telekommunikationsnetz, Programm und Computerprogrammprodukt
Procédé pour la mise en oeuvre de la virtualisation des fonctions de réseau d'un réseau de télécommunications fournissant des services de communication à des abonnés, réseau de télécommunications, programme et produit de programme informatique

(43) Date of publication of application: 14.10.2015
(73) Proprietor: Deutsche Telekom AG, 53113 Bonn (DE)
(72) Inventor: Michel, Uwe, 53639 Königswinter (DE); Breitbach, Johannes Markus, 53227 Bonn (DE); Nolan, Julian Charles, 1009 Pully (CH)
(74) Representative: Schwöbel, Thilo K.

(56) References cited:
- WO-A2-2014/018425
- US-A1- 2013 047 151
- "Network Function Virtualisation; Use Cases;NFVINF(13)IM_013_Embedding_compatibi lity_matrices_into_Use_Cases", ETSI DRAFT; NFVINF(13)IM_013_EMBEDDING_COMPATIBILITY_M ATRICES_INTO_USE_CASES, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.1.6, 24 September 2013 (2013-09-24), pages 1-56, XP014159756, [retrieved on 2013-09-24]
- "Network Functions Virtualisation (NFV); Virtualisation Requirements", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV, no. V1.1.1, 1 October 2013 (2013-10-01), XP014157408,
- ERICSSON: "Use Case Business Communication Cloud Service;NFV(13)R01029_Use_Case_Business_Co mmunication_Cloud_Service", ETSI DRAFT; NFV(13)R01029_USE_CASE_BUSINESS_COMMUNICAT ION_CLOUD_SERVICE, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 14 June 2013 (2013-06-14), pages 1-2, XP014199597, [retrieved on 2013-06-14]
- ERICSSON: "Use Case - Virtualisation of Mobile Core Network and IMS;NFV(13)USE009_Proposed_revision_to_Use _Case_Virtualization_of_Mobile_Core", ETSI DRAFT; NFV(13)USE009_PROPOSED_REVISION_TO_USE_CAS E_VIRTUALIZATION_OF_MOBILE_CORE, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 23 May 2013 (2013-05-23), pages 1-5, XP014199579, [retrieved on 2013-05-23]

## Description

### BACKGROUND

The present invention relates to a method for the implementation of network functions virtualization of a telecommunications network providing communication services to subscribers of the telecommunications network, wherein the telecommunications network comprises a virtualized network part comprising virtual hardware appliances, and a non-virtualized network part comprising physical hardware appliances.

The present invention further relates to telecommunications network for the implementation of network functions virtualization of the telecommunications network, the telecommunications network providing communication services to subscribers of the telecommunications network, wherein the telecommunications network comprises a virtualized network part comprising virtual hardware appliances, and a non-virtualized network part comprising physical hardware appliances.

Network functions virtualization is about implementing network functions in software. Today, such network functions are typically realized by implementations running on proprietary hardware. The result is that, typically, telecommunications network, i.e. network Operators' networks, are populated with a large and increasing variety of proprietary hardware appliances. Therefore, the efforts to realize any modification is comparably important: To launch a new network service often requires yet another variety (of proprietary hardware appliances) and finding the space and power to accommodate these additional hardware appliances is becoming increasingly difficult with existing network equipment, e.g. locations of base station entities with limited space and power resources. This is compounded by the increasing costs of energy, capital investment challenges and the rarity of skills necessary to design, integrate and operate increasingly complex hardware-based appliances. Moreover, hardware-based appliances rapidly reach end of life, requiring much of the procure design-integrate-deploy cycle to be repeated with little or no revenue benefit. Worse, hardware lifecycles are becoming shorter as technology and services innovation accelerates, inhibiting the roll out of new revenue earning network services and constraining innovation in an increasingly network-centric connected world.

Network Functions Virtualisation aims to address these problems by using virtualisation technology to consolidate many different network equipment types onto standardized hardware such as industry-standard high volume servers, switches and storage, which could be located in Datacentres, Network Nodes and in the end user premises.

However, the functionality of such virtualized network parts is likely to diverge from the functionality of legacy networks implemented with proprietary hardware appliances. This means that different functionality is likely to be offered by new networks which use virtual appliances compared to legacy networks which use physical hardware appliances.

As virtual and physical hardware appliances will be run side-by-side, connections requested by users who utilise virtual appliance specific functionality must be managed in the correct way.

Within presently available network structures, there is no way or it is at least difficult to determine whether a network (or a network part) based on virtual or physical (i.e. non-virtualized) hardware appliances is the best match for an application or service requested by a subscriber or mobile device.

Relevant prior art can be found in documents XP014159756, XP014157408, XP014199597 and XP014199579.

### SUMMARY

An object of the present invention is to provide a technically simple, quick and especially cost effective solution for an enhanced implementation of network functions virtualization of a telecommunications network, wherein the telecommunications network comprises a virtualized network part comprising virtual hardware appliances, and a non-virtualized network part comprising physical hardware appliances, and wherein it is easily possible to determine - for an application or a service requested by a subscriber or a mobile device - whether the requested service or the requested application should be handled by the virtualized network part or the non-virtualized network part. A further object of the present invention is to provide a telecommunications network that is able to implement network functions virtualization in an easy manner and at comparably low cost.

The object of the present invention is achieved by a method according to claim 1.

According to the present invention, it is advantageously possible to effectively handle service requests regarding communication services, and to provide such communication service by either using the virtualized network part or using solely the non-virtualized network part, or, in case that both the virtualized network part and the non-virtualized network part are suitable for providing the communication service, deciding which one of the virtualized network part and the non-virtualized network part or a combination of both to provide the communication service.

According to the present invention, as traffic flows through the telecommunications network (especially initiated by a device of a subscriber), the required network functionality/characteristics are compared to the network functionality available from both the physical and virtual network appliances (i.e. available from the virtualized network part and the non-virtualized network part) using the cache, i.e. using the first set of capability information and the second set of capability information. It is furthermore determined which network or network part provides the best contextual match for the requirements of the data being transferred. If functionality that is specific to either a virtual or physical appliance network (i.e. the virtualized network part or the non-virtualized network part of the telecommunications network) is not required, then a connection should be routed through a network type (new (virtual) or legacy (physical)) according to other criteria, such as lowest marginal cost.

According to the present invention, it is preferred that in case that both the first and second capabilities match the network function requirements of the special communication service, the choice of providing the special communication service using
-- the virtualized network part, or
-- the non-virtualized network part, or
-- partly the virtualized network part and partly the non-virtualized network part,
is dependent on an assignment configuration or assignment decision within the telecommunications network.

By means of such a configuration of the telecommunications network, it is advantageously possible to make a more optimized use of the telecommunications network and of its resources as it is possible to base the decision of which one of the virtualized network part and the non-virtualized network part (or which combination of both) should be used to provide the special communication service on one or a plurality of parameters such as:
-- effort(s) and/or cost(s) of the telecommunications network or the respective parts thereof (virtualized network part / non-virtualized network part) to provide the special communication service;
-- obtainable quality of service for the subscriber and/or user of the telecommunications network that request the special communication service and/or reductions of the quality of service for other users and/or subscribers of the telecommunications network, i.e. the users and/or subscriber that are not requesting the special communication service.

It is furthermore preferred according to the present invention that the first set of capability information and the second set of capability information are generated prior to determining whether the first capabilities and/or the second capabilities match the network function requirements of the special communication service.

Thereby, it is advantageously possible to generate the first set of capability information and the second set of capability information prior to deciding to which network part the request for the special communication service is directed. Especially, the collection of the first set of capability information and/or the second set of capability information is updated whenever a change within the structure of the telecommunications network occurred, e.g. when the capability of the virtualized network part is modified and/or when the capability of the non-virtualized network part is modified. The determination and/or the updating of the collection of the first set of capability information and/or the second set of capability information might occur either iteratively or when a function event occurs, i.e. when a network function is requested by the special communication service.

According to the present invention, it is furthermore preferred that in addition to the first set of capability information and the second set of capability information, a set of difference information is generated, the set of difference information being indicative of capabilities of the virtualized network part not provided by the non-virtualized network part, and of capabilities of the non-virtualized network part not provided by the virtualized network part.

Thereby, it is advantageously possible that by means of determining (and regularly updating) the difference information, a decision relating to whether the virtualized network part or the non-virtualized network part should be used for providing the special communication service can be taken more quickly and/or on a more informed basis. Especially, the differences between the physical and virtual appliance based networks (or network parts), are determined, and stored in a database which defines the functionality of both physical and virtual network appliances over time.

Furthermore, it is preferred according to the present invention that prior to the step of determining whether the first capabilities and/or the second capabilities match the network function requirements of the special communication service, the network function requirements of the special communication service are determined and a respective set of requirement information is generated.

Thereby, it is advantageously possible that the decision relating to whether the virtualized network part or the non-virtualized network part should be used for providing the special communication service can be taken yet more quickly and/or on a more informed basis. This might entail profiling the application or service (i.e. the requested special communication service) to determine the network functions which are required to execute the function or service (i.e. the special communication service), and store results in a cache.

Furthermore, it is preferred according to the present invention that the communication services are mobile communication services and/or wherein the subscribers of the telecommunications network are mobile subscribers or user equipments of a mobile communication network.

Thereby, it is advantageously possible according to the present invention that communication service provided to mobile subscribers are more effectively handled according to the method of the present invention.

Furthermore, the present invention relates to a telecommunications network according to claim 4.

All preferred embodiments as mentioned above with regard to the inventive method are also - mutatis mutandis - to be applied to the telecommunications network.

Accordingly, it is preferred according to the present invention that the telecommunications network is configured such that in case that both the first and second capabilities match the network function requirements of the special communication service, the choice of providing the special communication service using
-- the virtualized network part, or
-- the non-virtualized network part, or
-- partly the virtualized network part and partly the non-virtualized network part,
is dependent on an assignment configuration or assignment decision within the telecommunications network.

It is furthermore preferred according to the present invention that the telecommunications network is configured such that the first set of capability information and the second set of capability information are generated prior to determining whether the first capabilities and/or the second capabilities match the network function requirements of the special communication service.

Furthermore, it is preferred according to the present invention that the telecommunications network is configured such that in addition to the first set of capability information and the second set of capability information, a set of difference information is generated, the set of difference information being indicative capabilities of the virtualized network part not provided by the non-virtualized network part, and of capabilities of the non-virtualized network part not provided by the virtualized network part.

It is furthermore preferred according to the present invention that the telecommunications network is configured such that prior to the step of determining whether the first capabilities and/or the second capabilities match the network function requirements of the special communication service, the network function requirements of the special communication service are determined and a respective set of requirement information is generated.

Furthermore, it is preferred according to the present invention that the telecommunications network is a telecommunications network for providing mobile communication services to mobile subscribers or user equipments of a mobile communication network.

It is furthermore preferred according to the present invention that the telecommunications network comprises, besides the virtualized network part and the non-virtualized network part, a divergence management part, the divergence management part being provided to ensure network functions virtualization divergence management, wherein the divergence management part comprises the first set of capability information, the second set of capability information, the set of difference information, and the set of requirement information.

Additionally, the present invention relates to a program comprising a computer readable program code which, when executed on a computer or on a network component of a telecommunications network or on a plurality of network components of the telecommunications network, causes the computer or the network component of the telecommunications network or the plurality of network components of the telecommunications network to perform the inventive method.

Still additionally, the present invention relates to computer program product for using a telecommunications network or one or a plurality of network components thereof, the computer program product comprising a computer program stored on a storage medium, the computer program comprising program code which, when executed on a computer or on a network component of a telecommunications network or on a plurality of network components of the telecommunications network, causes the computer or the network component of the telecommunications network or the plurality of network components of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an example of an architecture of a telecommunications network according to the present invention, comprising a virtualized network part and a non-virtualized network part.
Figures 2 and 3 schematically illustrate an overview of a method flow diagram (Figure 2) and a more detailed representation of a method flow diagram (Figure 3) of the inventive method according to the present invention.
Figure 4 schematically illustrates a multitude of decision points for a traffic flow within the telecommunications network and between the virtualized network part and the non-virtualized network part, respectively.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

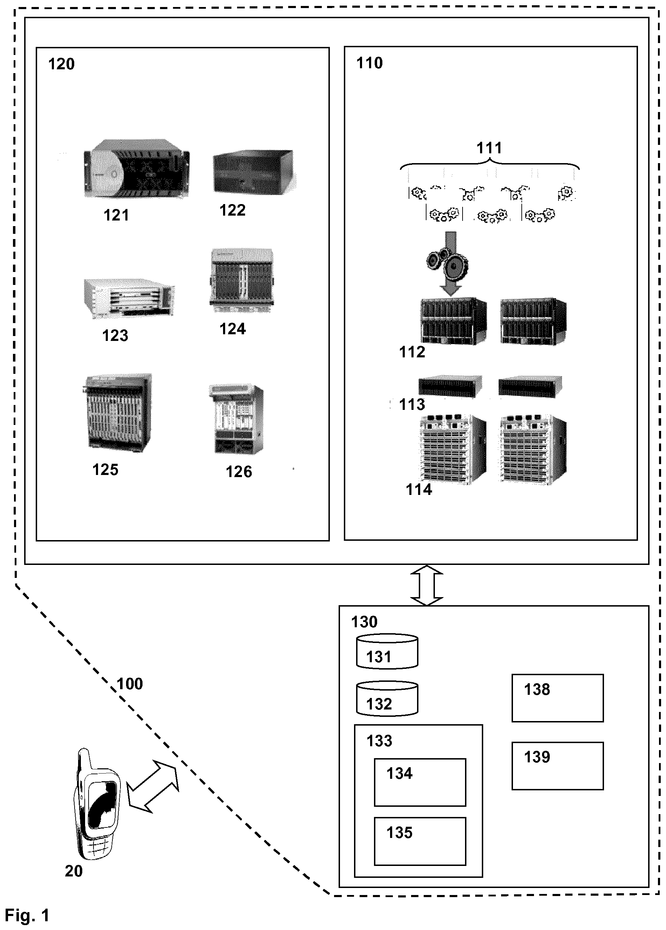

In Figure 1, an example of an architecture of a telecommunications network 100 according to the present invention is schematically shown. The telecommunications network 100 comprises a virtualized network part 110 and a non-virtualized network part 120, and provides communication services to a subscriber 20 of the telecommunications network 100. The telecommunications network 100 is configured for the implementation of network functions virtualization, wherein the virtualized network part 110 comprises virtual hardware appliances, and the non-virtualized network part 120 comprises physical hardware appliances.

According to the present invention, the virtualized network part 110 typically and preferably comprises a plurality of virtual devices or a plurality of virtual appliances 111 that are supported or created as software instances within physical hardware, such physical hardware encompassing typically standard high volume servers 112 and/or standard high volume storage 113 and/or standard high volume ethernet switches 114.

The non-virtualized network part 120 typically comprises physical hardware components that provide network nodes of the telecommunications network 100, such as one or a plurality of message routers 121 and/or one or a plurality of content delivery networks 122 and/or one or a plurality of deep packet inspection devices 123 and/or one or a plurality of firewalls 124 and/or one or a plurality of SGSNs/GGSNs (Serving GPRS (General Packet Radio System) support node / Gateway GPRS support node) and/or one or a plurality of Provider Edge router.

According to the present invention, the telecommunications network 100 comprises a first set of capability information 131 and a second set of capability information 132, the first set of capability information 131 being indicative of first capabilities of the virtualized network part 110, the second set of capability information 132 being indicative of second capabilities of the non-virtualized network part 120. The first and second set of capability information 131, 132 is preferably stored in one database or in two different databases (or in a plurality of (more than two) databases).

Preferably according to the present invention, and in the embodiment represented in Figure 1, the telecommunications network 100 generates - in addition to the first set of capability information 131 and to the second set of capability information 132 - a set of difference information 134, the set of difference information 134 being indicative of capabilities of the virtualized network part 110 not provided by the non-virtualized network part 120, and of capabilities of the non-virtualized network part 120 not provided by the virtualized network part 110.

According to the present invention and preferably prior to determining whether the first capabilities and/or the second capabilities match the network function requirements of the special communication service, the network function requirements of the special communication service are determined and a respective set of requirement information 135 is generated.

The difference information 134 and the requirement information 135 are preferably in a memory device, especially a cache.

Typically, the telecommunications network 100 according to the present invention comprises a management part 130, wherein the management part 130 is provided to ensure network functions virtualization divergence management. The divergence management part 130 preferably comprises the first set of capability information 131, the second set of capability information 132, the set of difference information 134, and the set of requirement information 135.

Furthermore, the management part 130 typically comprises a processor part 138, and a memory part 139.

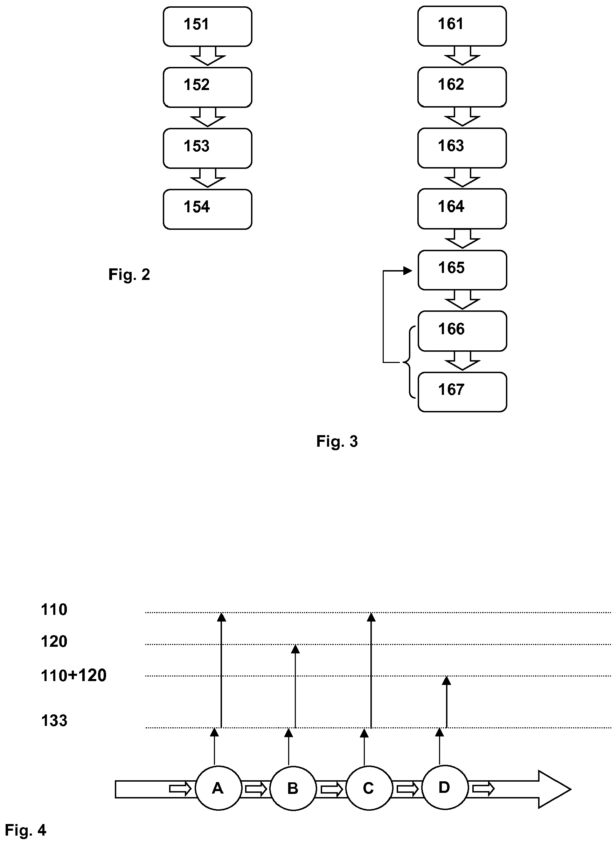

In Figure 2, an overview of a method flow diagram of the inventive method according to the present invention is schematically shown. According to this overview, the method comprises a first processing step 151, a second processing second step 152, a third processing step 153, and a fourth processing step 154.

The first processing step 151 corresponds to computing network functions and associated characteristics that are not supported by both virtual and physical appliances, i.e. that are not supported by both the virtualized network part 110 and the non-virtualized network part 120. The second processing step 152 corresponds to determining network functions required by an appliance or service, i.e. required by the special communication service (which is requested by the at least one subscriber 20. The third processing step 153 corresponds to computing if the required network function and associated characteristics is provided by physical and/or virtual network appliances, i.e. that are not supported by both the virtualized network part 110 and the non-virtualized network part 120. The fourth processing step 154 corresponds determining which one (of the virtualized network part 110 or the non-virtualized network part 120) to use to if both virtual and physical networks can be used.

This means that in Figure 2, the first processing step 151 is to define the functionality and characteristics - by means of computing network functions and associated characteristics - (such as latency, bandwidth, throughput etc.) which is/are offered by the legacy network equipment, i.e. the non-virtualized network part 120. A similar step is then taken for virtual cloud based network resources, i.e. the virtualized network part 120, which is repeated as necessary as these virtual resources are updated. The difference in functionality and characteristics between legacy network equipment (or non-virtualized network part 120) and virtual cloud based network resources (or virtualized network part 110) is then computed, with the results stored in a database_DF (database of the set of difference information 134). Examples of the differences in functionality which may be profiled include, e.g., Deep Packet Inspection (DPI) and network based video coding, i.e. the availability of services regarding certain video codecs. In the second processing step, the application or service network functional and characteristic needs of a user device are then profiled, i.e. the set of requirement information 135, regarding requirements (or needs) of the special communication service. The results are compared with the set of difference information, i.e. the database_DF, and as a result of this, the optimum network connection - physical, i.e. the use of the non-virtualized network part 120, or virtual, i.e. the use of the virtualized network part 110 - is computed. This can be done either individually, i.e. for each session or call, or as a global result for all possible connections in a given network topology.

In Figure 3, a more detailed representation (compared to Figure 2) of a method flow diagram of the inventive method according to the present invention is schematically shown. According to this more detailed representation, the method comprises a first processing step 161, a second processing second step 162, a third processing step 163, a fourth processing step 164, a fifth processing second step 165, a sixth processing step 166, and a seventh processing step 167.

The first processing step 161 corresponds to determining, as the second set of capability information 132, functionality and associated characteristics of physical hardware appliances, i.e. of the non-virtualized network part 120, and to store the result in a database, hereinafter also called "database_HA". The second processing step 162 corresponds to determining, as the first set of capability information 131, functionality and associated characteristics of virtual appliances, i.e. of the virtualized network part 110, and to store the result in a database, hereinafter also called "database_VA". The second processing step 162 is preferably iterated on a time or event driven basis, i.e. based on modifications or changes within the virtualized network part 110. The third processing step 163 corresponds to using the databases HA and VA (i.e. comprising the second set of capability information 132 and the first set of capability information 131) and to determine the differences in functionality between the physical and virtual appliances (i.e. the virtualized network part 110 and the non-virtualized network part 120). The result thereof is stored as the set of difference information 134 in a database, hereinafter also called "database_DF". Furthermore, the third processing step 163 preferably encompasses to synchronise iterations of updating steps of the database of the first set of capability information 131 ("database_VA"), and store the result in "database_DF" and/or transfer the results to a cache memory "cache_DF", comprising the set of difference information 134. The fourth processing step 164 corresponds to profiling an application or service, i.e. the special communication service, which is to be executed on a device (i.e. the at least one subscriber 20) connected to the telecommunications network 100 to determine which network functions will be required (either for the complete application or service (of the special communication service), or during the execution of one aspect of it). Furthermore during the fourth processing step 164, the required network functions are stored in a database of cache memory of the set of requirement information 135, hereinafter also called "cache_RNF". The fifth processing step 165 corresponds to using the "cache_RNF" (i.e. the set of requirement information 135) and "cache_DF" (i.e. the set of difference information 134) in order to determine whether one or both of the virtual and physical hardware appliances (i.e. the virtualized network part 110 and the non-virtualized network part 120) has the functionality and associated characteristics required for the execution of the network traffic flow associated with the service or application (special communication service) on the device (or subscriber 20). The sixth processing step 166 corresponds to - in case that only one of the virtual and physical network appliance networks (i.e. the virtualized network part 110 or the non-virtualized network part 120) can be used with the traffic flow from the device - routing the connection (related to the special communication service) through the respective network appliance or network part (i.e. through either the virtualized network part 110 or the non-virtualized network part 120) that meets the needs of the service or application. The seventh processing step 167 corresponds to - in case that both the virtual and physical network appliances (i.e. both the virtualized network part 110 and the non-virtualized network part 120) can meet the needs of the service or application (special communication service) of the device or subscriber 20 - routing the connection using criteria such as lowest marginal cost, network performance aspects of the telecommunications network 100 or other criteria.

According to the present invention, the inventive method is executed involving two main computational elements. A first computational element profiles the applications and services (i.e. the special communication service) which are executed on a device (or subscriber 20, such as a smartphone) which wishes to access and use the telecommunications network 100. This first computation element can execute either on the device (or subscriber 20), i.e. for example a smartphone, itself, or it may reside in the telecommunications network 100 (i.e. on a node of the telecommunications network 100) and make use of signaling data which indicate the requirements of the services and applications (special communication service) which are executing on the mobile device or subscriber 20. A second computational element typically executes within the telecommunications network 100, and is used to determine whether the network functions and characteristics required by the services or applications executed on the mobile device (or subscriber 20) should be connected through the physical network part (the non-virtualized network part 120) or the virtual network part (virtualized network part 110).

The first processing step 161 shown in figure 2 is to determine the functionality and characteristics of the physical hardware appliances and to store the result in a database_HA. Database_HA is typically part of the network functions virtualization divergence manager part 130. The network functions supported and associated characteristics are determined in the case of physical hardware appliances (i.e. the second set of capability information 132) by a central repository or other log of each physical hardware appliance and the network functions it supports. In the case of virtualized network functions (i.e. for the virtualized network part 110), the available network functions and associated characteristics (i.e. the first set of capability information 131) may be determined - in the second processing step 162 - in a similar way or, for example, by a registry of network appliances which have been installed. The network functions implemented by the virtual appliances are stored in database_VA. As the network function and associated characteristics implemented by the virtual appliances are likely to evolve over time, the functions stored in data_VA may or should preferably be updated over time, for example according to events generated on a time or function change basis.

Using databases HA and VA, the differences in functionality between the physical and virtual appliances are determined in the third processing step 163, with the characteristics associated with each function also being recorded. Preferably, this is synchronized to each update of database_VA, with the result stored in cache_DF. Accordingly cache_DF stores a record of the functions and associated characteristics which are only available in one of the networks (virtualised or physical) or network parts 110, 120.

In parallel with the above network centric (second) computation element or elements, a device centric (first) computational element is also used according to the present invention. This first computational element profiles - in the fourth processing step 164 - an application or service which is to be executed on a device which is either already, or which has the potential to be, connected to the network. The profiler (or first computational element) determines which network functions will be required either for the execution of the complete application or service, or for one aspect of it, and which characteristics (bandwidth, latency etc.) will be required of these network functions. The network functions and their associated characteristics which are required are stored in the required network functions cache_RNF. Optionally, information may also be added such that it is possible to assess whether network functions are recommended or essential to the execution of a device application or service. This may then be used to prioritize and schedule the use of virtual of physical network functions.

The network centric computation element then uses cache_RNF and cache_DF to determine - in the fifth processing step - whether one or both of the virtual and physical hardware appliances has the functionality for each required function and the characteristics required for the execution of the device service or application and its associated traffic. Computations are made as the traffic flows through the network, with the decision process executing multiple times as the traffic flow indicates that different functions or function/characteristic permutations may be required. Cache_RNF is used to determine a subset of the network functions which will be required during the call, and may be used to optimise aspects of the network. The required network functions are extracted from the traffic flow, and used to query cache_DF. Cache DF then returns whether the functions are implemented in virtual or physical networks.

Figure 4 schematically illustrates a multitude of decision points for a traffic flow within the telecommunications network and between the virtualized network part and the non-virtualized network part, respectively, i.e. how functions are selected in response to a flow of traffic. The network functions required for the flow are used to query cache_DF, which then returns whether the traffic should be routed through the physical or virtual networks. As can be seen for functions A, B, C and D, the routing decision may be different for different functions within the same traffic flow: Function A is executed by the virtualized network part 110 of the telecommunications network 100; function B is executed by the non-virtualized network part 120 of the telecommunications network 100; function C is executed by the virtualized network part 110 of the telecommunications network 100; and function D is executed by a combination of the virtualized network part 110 and the non-virtualized network part 120.

According to the preferred embodiment of the present invention, the computation needed to make the decision on whether to use legacy or virtualised networks may be decoupled from its execution. Accordingly the possible permutations are envisaged:

The decision computation and execution are preferably implemented in the same physical location.

According to the present invention, the decision computation (for example, on a whole traffic path) is preferably made in a central location, with its execution being carried out in the physical locations where the traffic is switched between legacy and virtualised networks (i.e. the virtualized network part 110 and the non-virtualized network part 120).

According to the present invention, it is preferred that only a subset of the total number of network implemented application-level optimization functions such as CDNs, Cache Servers, Load Balancers and Application Accelerators are implemented in the legacy physical network (i.e. the non-virtualized network part 120). Over time, as the virtual network (i.e. the virtualized network part 110) evolves, newer functions may only be implemented in the virtual network (i.e. in the virtualized network part 110) rather than the legacy physical network. The "cache_RNF" indicates which network functions are required. For those functions which are not present in both networks, "cache_DF" indicates in which network (i.e. network part among the virtualized network part 110 and the non-virtualized network part 120) such a function can be found (usually the virtual network part, but the reverse case may also be true, e.g., for older legacy functions.

If only one of the virtual and physical network appliance networks can be used with the device service or application, then the connection is routed through the network appliance which can meet the needs of the device service or application.

According to the present invention, if both virtual and physical network appliances can meet the needs of the device service or application, then it is decided how to route the connection using another criteria, such as marginal cost.

Example use cases include the following:
According to a first use case: A user (subscriber 20 or mobile device) connects to the telecommunications network 100; profiling the requested applications (or the potential applications on the mobile device 20 of the user) reveal that these applications require the use of a function only implemented by network functions virtualization in the cloud (i.e. the virtualized network part 110); the consequence is that the connection is routed to the cloud (i.e. the virtualized network part 110 is used).

According to a second use case: A user (subscriber 20 or mobile device) connects to the telecommunications network 100; profiling the applications reveal that applications currently open do not require the use of network functions virtualization specific functions; the network determines that the call may be more cost effectively routed using the legacy network (i.e. the non-virtualized network part 120) rather than the cloud (the virtualized network part 110); the connection is hence routed using the legacy network.

According to a third use case: A user (subscriber 20 or mobile device) connects to the telecommunications network 100; profiling of the applications reveal that the mobile device requires use of a function only implemented by network functions virtualization in the cloud (i.e. by the virtualized network part 110) but that other functions can be implemented in the physical network (i.e. the non-virtualized network part 120); the cloud based network functions virtualization includes a virtualised EPC with a virtual MME, a virtual SGW, a virtual HSS and a virtual. The traffic flow passes through the network with the step by step decision taken several times for the traffic flow to determine in real time whether use the cloud (i.e. the virtualized network part 110) or physical based networks (i.e. the non-virtualized network part 120); this means that a Hardware MME might be combined with a virtualised SGW and then again a Hardware PGW etc. or vice versa.

## Claims

1. Method for the implementation of network functions virtualization of a telecommunications network (100) providing communication services to subscribers (20) of the telecommunications network (100),
wherein the telecommunications network (100) comprises a virtualized network part (110) comprising virtual hardware appliances, and a non-virtualized network part (120) comprising physical hardware appliances, wherein the telecommunications network (100) furthermore comprises a first set of capability information (131) and a second set of capability information (132), the first set of capability information (131) being indicative of first capabilities of the virtualized network part (110), the second set of capability information (132) being indicative of second capabilities of the non-virtualized network part (120),
wherein with respect to a special communication service and regarding network function requirements of the special communication service - the special communication service being requested or at least able to be requested by at least one subscriber (20) of the telecommunications network (100) -, the method comprises the step of determining whether the first capabilities and/or the second capabilities match the network function requirements of the special communication service, wherein
-- in case that only the first capabilities match the network function requirements of the special communication service, the special communication service is provided, by the telecommunications network (100), using the virtualized network part (110),
-- in case that only the second capabilities match the network function requirements of the special communication service, the special communication service is provided, by the telecommunications network (100), using the non-virtualized network part (120),
-- in case that both the first and second capabilities match the network function requirements of the special communication service, the special communication service is provided using one of the virtualized network part (110) and the non-virtualized network part (120), or partly the virtualized network part (110) and partly the non-virtualized network part (120),
wherein the method further comprises the steps of:
-- storing in a database_HA functionality and characteristics of the physical hardware appliances corresponding to the second set of capability information (132);
-- storing in a database_VA the network functions implemented by the virtual appliances corresponding to the first set of capability information (131);
-- storing the network functions and their associated characteristics which are required in a required network functions cache_RNF;
-- determining by using databases HA and VA the differences in functionality between the physical and virtual appliances in a third processing step (163), with the characteristics associated with each function also being recorded;
-- synchronizing this to each update of database_VA, with the result being stored in cache_DF;
-- using cache_RNF and cache_DF to determine - in the fifth processing step - whether one or both of the virtual and physical hardware appliances has the functionality for each required function and the characteristics required for the execution of the device service or application and its associated traffic.

2. Method according to claim 1, wherein in case that both the first and second capabilities match the network function requirements of the special communication service, the choice of providing the special communication service using
-- the virtualized network part (110), or
-- the non-virtualized network part (120), or
-- partly the virtualized network part (110) and partly the non-virtualized network part (120),
is dependent on an assignment configuration or assignment decision within the telecommunications network (100).

3. Method according to one of the preceding claims, wherein the communication services are mobile communication services and/or wherein the subscribers (20) of the telecommunications network (100) are mobile subscribers (20) or user equipments of a mobile communication network.

4. Telecommunications network (100) for the implementation of network functions virtualization of the telecommunications network (100), the telecommunications network (100) providing communication services to subscribers (20) of the telecommunications network (100),
wherein the telecommunications network (100) comprises a virtualized network part (110) comprising virtual hardware appliances, and a non-virtualized network part (120) comprising physical hardware appliances, wherein the telecommunications network (100) furthermore comprises a first set of capability information (131) and a second set of capability information (132), the first set of capability information (131) being indicative of first capabilities of the virtualized network part (110), the second set of capability information (132) being indicative of second capabilities of the non-virtualized network part (120),
wherein with respect to a special communication service and regarding network function requirements of the special communication service - the special communication service being requested or at least able to be requested by at least one subscriber (20) of the telecommunications network (100) -, the telecommunications network (100) is configured such that it is determined whether the first capabilities and/or the second capabilities match the network function requirements of the special communication service, wherein the telecommunications network (100) is configured such that:
-- in case that only the first capabilities match the network function requirements of the special communication service, the special communication service is provided, by the telecommunications network (100), using the virtualized network part (110),
-- in case that only the second capabilities match the network function requirements of the special communication service, the special communication service is provided, by the telecommunications network (100), using the non-virtualized network part (120),
-- in case that both the first and second capabilities match the network function requirements of the special communication service, the special communication service is provided using one of the virtualized network part (110) and the non-virtualized network part (120), or partly the virtualized network part (110) and partly the non-virtualized network part (120),
wherein the telecommunications network (100) is configured for:
-- storing in a database_HA functionality and characteristics of the physical hardware appliances corresponding to the second set of capability information (132);
-- storing in a database_VA the network functions implemented by the virtual appliances corresponding to the first set of capability information (131);
-- storing the network functions and their associated characteristics which are required in a required network functions cache_RNF;
-- determining by using databases HA and VA the differences in functionality between the physical and virtual appliances in a third processing step (163), with the characteristics associated with each function also being recorded;
-- synchronizing this to each update of database_VA, with the result being stored in cache_DF;
-- using cache_RNF and cache_DF to determine - in the fifth processing step - whether one or both of the virtual and physical hardware appliances has the functionality for each required function and the characteristics required for the execution of the device service or application and its associated traffic.

5. Telecommunications network (100) according to claim 4, wherein the telecommunications network (100) is configured such that in case that both the first and second capabilities match the network function requirements of the special communication service, the choice of providing the special communication service using
-- the virtualized network part (110), or
-- the non-virtualized network part (120), or
-- partly the virtualized network part (110) and partly the non-virtualized network part (120),
is dependent on an assignment configuration or assignment decision within the telecommunications network (100).

6. Telecommunications network (100) according to one of claims 4 or 5, wherein the telecommunications network (100) is configured such that the first set of capability information (131) and the second set of capability information (132) are generated prior to determining whether the first capabilities and/or the second capabilities match the network function requirements of the special communication service.

7. Telecommunications network (100) according to one of claims 4 to 6, wherein the telecommunications network (100) is configured such that in addition to the first set of capability information (131) and the second set of capability information (132), a set of difference information (134) is generated, the set of difference information (134) being indicative of capabilities of the virtualized network part (110) not provided by the non-virtualized network part (120), and of capabilities of the non-virtualized network part (120) not provided by the virtualized network part (110).

8. Telecommunications network (100) according to one of claims 4 to 7, wherein the telecommunications network (100) is configured such that prior to the step of determining whether the first capabilities and/or the second capabilities match the network function requirements of the special communication service, the network function requirements of the special communication service are determined and a respective set of requirement information (135) is generated.

9. Telecommunications network (100) according to one of claims 4 to 8, wherein the telecommunications network (100) is a telecommunications network (100) for providing mobile communication services to mobile subscribers (20) or user equipments of a mobile communication network.

10. Telecommunications network (100) according to one of claims 4 to 9, wherein the telecommunications network (100) comprises, besides the virtualized network part (110) and the non-virtualized network part (120), a divergence management part (130), the divergence management part (130) being provided to ensure network functions virtualization divergence management, wherein the divergence management part (130) comprises the first set of capability information (131), the second set of capability information (132), the set of difference information (134), and the set of requirement information (135).

11. Program comprising a computer readable program code which, when executed on a computer or on a network component of a telecommunications network (100) or on a plurality of network components of the telecommunications network (100), causes the computer or the network component of the telecommunications network (100) or the plurality of network components of the telecommunications network (100) to perform a method according one of claims 1 to 3.

12. Computer program product for using a telecommunications network (100) or one or a plurality of network components thereof, the computer program product comprising a computer program stored on a storage medium, the computer program comprising program code which, when executed on a computer or on a network component of a telecommunications network (100) or on a plurality of network components of the telecommunications network (100), causes the computer or the network component of the telecommunications network (100) or the plurality of network components of the telecommunications network (100) to perform a method according one of claims 1 to 3.

## Patentansprüche

1. Verfahren zum Implementieren der Virtualisierung von Netzfunktionen eines Telekommunikationsnetzes (100), das Kommunikationsdienste für Teilnehmer (20) des Telekommunikationsnetzes (100) erbringt,
wobei das Telekommunikationsnetz (100) einen virtualisierten Netzteil (110), der virtuelle Hardware-Apparate aufweist, und einen nicht virtualisierten Netzteil (120), der physische Hardware-Apparate aufweist, umfasst, wobei das Telekommunikationsnetz (100) ferner einen ersten Satz von Fähigkeitsinformationen (131) und einen zweiten Satz von Fähigkeitsinformationen (132) umfasst, wobei der erste Satz von Fähigkeitsinformationen (131) erste Fähigkeiten des virtualisierten Netzteils (110) anzeigt, wobei der zweite Satz von Fähigkeitsinformationen (132) zweite Fähigkeiten des nicht virtualisierten Netzteils (120) anzeigt,
wobei im Hinblick auf einen speziellen Kommunikationsdienst und in Bezug auf Netzfunktionsanforderungen des speziellen Kommunikationsdiensts - wobei der spezielle Kommunikationsdienst von wenigstens einem Teilnehmer (20) des Telekommunikationsnetzes (100) angefordert wird oder zumindest angefordert werden kann - das Verfahren den Schritt umfasst: Bestimmen, ob die ersten Fähigkeiten und/oder die zweiten Fähigkeiten mit den Netzfunktionsanforderungen des speziellen Kommunikationsdiensts übereinstimmen, wobei
- für den Fall, dass nur die ersten Fähigkeiten mit den Netzfunktionsanforderungen des speziellen Kommunikationsdiensts übereinstimmen, der spezielle Kommunikationsdienst vom Telekommunikationsnetz (100) mit Hilfe des virtualisierten Netzteils (110) bereitgestellt wird,
- für den Fall, dass nur die zweiten Fähigkeiten mit den Netzfunktionsanforderungen des speziellen Kommunikationsdiensts übereinstimmen, der spezielle Kommunikationsdienst vom Telekommunikationsnetz (100) mit Hilfe des nicht virtualisierten Netzteils (120) bereitgestellt wird,
- für den Fall, dass sowohl die ersten als auch die zweiten Fähigkeiten mit den Netzfunktionsanforderungen des speziellen Kommunikationsdiensts übereinstimmen, der spezielle Kommunikationsdienst mit Hilfe entweder des virtualisierten Netzteils (110) oder des nicht virtualisierten Netzteils (120) oder teilweise des virtualisierten Netzteils (110) und teilweise des nicht virtualisierten Netzteils (120) bereitgestellt wird,
wobei das Verfahren weiterhin die Schritte umfasst:
- Speichern der Funktionalität und Eigenschaften der physischen Hardware-Apparate, die dem zweiten Satz von Fähigkeitsinformationen (132) entsprechen, in einer Datenbank_HA;
- Speichern der Netzfunktionen, die von den virtuellen Apparaten, die dem ersten Satz von Fähigkeitsinformationen (131) entsprechen, implementiert werden, in einer Datenbank_VA;
- Speichern der Netzfunktionen und ihrer verbundenen erforderlichen Eigenschaften in einem Cache_RNF erforderlicher Netzfunktionen;
- Bestimmen der Funktionalitätsdifferenzen zwischen den physischen und den virtuellen Apparaten mit Hilfe der Datenbanken HA und VA in einem dritten Verarbeitungsschritt (163), wobei auch die mit jeder Funktion verbundenen Eigenschaften aufgenommen werden;
- Entsprechende Synchronisierung zu jeder Aktualisierung der Datenbank_VA, wobei das Ergebnis im Cache_DF gespeichert wird;
- Verwenden des Cache_RNF und Cache_DF zum Bestimmen - im fünften Verarbeitungsschritt -, ob die virtuellen Apparate und/oder die physischen Hardware-Apparate die Funktionalität für jede erforderliche Funktion und die für die Ausführung des Gerätedienstes oder der Geräteapplikation und des damit verbundenen Verkehrs erforderlichen Eigenschaften aufweisen.

2. Verfahren nach Anspruch 1, wobei für den Fall, dass sowohl die ersten als auch die zweiten Fähigkeiten mit den Netzfunktionsanforderungen des speziellen Kommunikationsdiensts übereinstimmen, die Auswahl zur Bereitstellung des speziellen Kommunikationsdiensts mit Hilfe
- des virtualisierten Netzteils (110) oder
- des nicht virtualisierten Netzteils (120) oder
- teilweise des virtualisierten Netzteils (110) und teilweise des nicht virtualisierten Netzteils (120)
von einer Zuweisungskonfiguration oder Zuweisungsentscheidung innerhalb des Telekommunikationsnetzes (100) abhängig ist.

3. Verfahren nach einem der vorhergehenden Ansprüche, wobei die Kommunikationsdienste mobile Kommunikationsdienste sind und/oder wobei die Teilnehmer (20) des Telekommunikationsnetzes (100) Mobilteilnehmer (20) oder Benutzereinrichtungen eines Mobilkommunikationsnetzes sind.

4. Telekommunikationsnetz (100) zum Implementieren der Virtualisierung von Netzfunktionen des Telekommunikationsnetzes (100), wobei das Telekommunikationsnetz (100) Kommunikationsdienste für Teilnehmer (20) des Telekommunikationsnetzes (100) erbringt, wobei das Telekommunikationsnetz (100) einen virtualisierten Netzteil (110), der virtuelle Hardware-Apparate aufweist, und einen nicht virtualisierten Netzteil (120), der physische Hardware-Apparate aufweist, umfasst, wobei das Telekommunikationsnetz (100) ferner einen ersten Satz von Fähigkeitsinformationen (131) und einen zweiten Satz von Fähigkeitsinformationen (132) umfasst, wobei der erste Satz von Fähigkeitsinformationen (131) erste Fähigkeiten des virtualisierten Netzteils (110) anzeigt, wobei der zweite Satz von Fähigkeitsinformationen (132) zweite Fähigkeiten des nicht virtualisierten Netzteils (120) anzeigt,
wobei im Hinblick auf einen speziellen Kommunikationsdienst und in Bezug auf Netzfunktionsanforderungen des speziellen Kommunikationsdiensts - wobei der spezielle Kommunikationsdienst von wenigstens einem Teilnehmer (20) des Telekommunikationsnetzes (100) angefordert wird oder zumindest angefordert werden kann - das Telekommunikationsnetz (100) so ausgestaltet ist, dass bestimmt wird, ob die ersten Fähigkeiten und/oder die zweiten Fähigkeiten mit den Netzfunktionsanforderungen des speziellen Kommunikationsdiensts übereinstimmen, wobei das Telekommunikationsnetz (100) so ausgestaltet ist, dass
- für den Fall, dass nur die ersten Fähigkeiten mit den Netzfunktionsanforderungen des speziellen Kommunikationsdiensts übereinstimmen, der spezielle Kommunikationsdienst vom Telekommunikationsnetz (100) mit Hilfe des virtualisierten Netzteils (110) bereitgestellt wird,
- für den Fall, dass nur die zweiten Fähigkeiten mit den Netzfunktionsanforderungen des speziellen Kommunikationsdiensts übereinstimmen, der spezielle Kommunikationsdienst vom Telekommunikationsnetz (100) mit Hilfe des nicht virtualisierten Netzteils (120) bereitgestellt wird,
- für den Fall, dass sowohl die ersten als auch die zweiten Fähigkeiten mit den Netzfunktionsanforderungen des speziellen Kommunikationsdiensts übereinstimmen, der spezielle Kommunikationsdienst mit Hilfe entweder des virtualisierten Netzteils (110) oder des nicht virtualisierten Netzteils (120) oder teilweise des virtualisierten Netzteils (110) und teilweise des nicht virtualisierten Netzteils (120) bereitgestellt wird,
wobei das Telekommunikationsnetz (100) ausgestaltet ist zum:
- Speichern der Funktionalität und Eigenschaften der physischen Hardware-Apparate, die dem zweiten Satz von Fähigkeitsinformationen (132) entsprechen, in einer Datenbank_HA;
- Speichern der Netzfunktionen, die von den virtuellen Apparaten, die dem ersten Satz von Fähigkeitsinformationen (131) entsprechen, implementiert werden, in einer Datenbank_VA;
- Speichern der Netzfunktionen und ihrer verbundenen erforderlichen Eigenschaften in einem Cache_RNF erforderlicher Netzfunktionen;
- Bestimmen der Funktionalitätsdifferenzen zwischen den physischen und den virtuellen Apparaten mit Hilfe der Datenbanken HA und VA in einem dritten Verarbeitungsschritt (163), wobei auch die mit jeder Funktion verbundenen Eigenschaften aufgenommen werden;
- Entsprechende Synchronisierung zu jeder Aktualisierung der Datenbank_VA, wobei das Ergebnis im Cache_DF gespeichert wird;
- Verwenden des Cache RNF und Cache_DF zum Bestimmen - im fünften Verarbeitungsschritt -, ob die virtuellen Apparate und/oder die physischen Hardware-Apparate die Funktionalität für jede erforderliche Funktion und die für die Ausführung des Gerätedienstes oder der Geräteapplikation und des damit verbundenen Verkehrs erforderlichen Eigenschaften aufweisen.

5. Telekommunikationsnetz (100) nach Anspruch 4, wobei das Telekommunikationsnetz (100) so ausgestaltet ist, dass für den Fall, dass sowohl die ersten als auch die zweiten Fähigkeiten mit den Netzfunktionsanforderungen des speziellen Kommunikationsdiensts übereinstimmen, die Auswahl zur Bereitstellung des speziellen Kommunikationsdiensts mit Hilfe
- des virtualisierten Netzteils (110) oder
- des nicht virtualisierten Netzteils (120) oder
- teilweise des virtualisierten Netzteils (110) und teilweise des nicht virtualisierten Netzteils (120)
von einer Zuweisungskonfiguration oder Zuweisungsentscheidung innerhalb des Telekommunikationsnetzes (100) abhängig ist.

6. Telekommunikationsnetz (100) nach einem der Ansprüche 4 oder 5, wobei das Telekommunikationsnetz (100) so ausgestaltet ist, dass der erste Satz von Fähigkeitsinformationen (131) und der zweite Satz von Fähigkeitsinformationen (132) erzeugt werden, bevor die Bestimmung erfolgt, ob die ersten Fähigkeiten und/oder die zweiten Fähigkeiten mit den Netzfunktionsanforderungen des speziellen Kommunikationsdiensts übereinstimmen.

7. Telekommunikationsnetz (100) nach einem der Ansprüche 4 bis 6, wobei das Telekommunikationsnetz (100) so ausgestaltet ist, dass zusätzlich zum ersten Satz von Fähigkeitsinformationen (131) und zweiten Satz von Fähigkeitsinformationen (132) ein Satz von Differenzinformationen (134) erzeugt wird, wobei der Satz von Differenzinformationen (134) Fähigkeiten des virtualisierten Netzteils (110), die vom nicht virtualisierten Netzteil (120) nicht bereitgestellt werden, und Fähigkeiten des nicht virtualisierten Netzteils (120), die vom virtualisierten Netzteil (110) nicht bereitgestellt werden, anzeigt.

8. Telekommunikationsnetz (100) nach einem der Ansprüche 4 bis 7, wobei das Telekommunikationsnetz (100) so ausgestaltet ist, dass vor dem Schritt des Bestimmens, ob die ersten Fähigkeiten und/oder die zweiten Fähigkeiten mit den Netzfunktionsanforderungen des speziellen Kommunikationsdiensts übereinstimmen, die Netzfunktionsanforderungen des speziellen Kommunikationsdiensts bestimmt werden und ein entsprechender Satz von Anforderungsinformationen (135) erzeugt wird.

9. Telekommunikationsnetz (100) nach einem der Ansprüche 4 bis 8, wobei das Telekommunikationsnetz (100) ein Telekommunikationsnetz (100) zum Bereitstellen von Mobilkommunikationsdiensten für Mobilteilnehmer (20) oder Benutzereinrichtungen eines Mobilkommunikationsnetzes ist.

10. Telekommunikationsnetz (100) nach einem der Ansprüche 4 bis 9, wobei das Telekommunikationsnetz (100) neben dem virtualisierten Netzteil (110) und dem nicht virtualisierten Netzteil (120) einen Abweichungsverwaltungsteil (130) umfasst, wobei der Abweichungsverwaltungsteil (130) vorgesehen ist, um die Verwaltung von Abweichungen der Netzfunktionsvirtualisierung sicherzustellen, wobei der Abweichungsverwaltungsteil (130) den ersten Satz von Fähigkeitsinformationen (131), den zweiten Satz von Fähigkeitsinformationen (132), den Satz von Differenzinformationen (134) und den Satz von Anforderungsinformationen (135) umfasst.

11. Programm, das einen computerlesbaren Programmcode umfasst, der bei Ausführung auf einem Computer oder auf einer Netzkomponente eines Telekommunikationsnetzes (100) oder auf mehreren Netzkomponenten des Telekommunikationsnetzes (100) bewirkt, dass der Computer oder die Netzkomponente des Telekommunikationsnetzes (100) oder die mehreren Netzkomponenten des Telekommunikationsnetzes (100) ein Verfahren nach einem der Ansprüche 1 bis 3 ausführen.

12. Computerprogrammprodukt zum Verwenden eines Telekommunikationsnetzes (100) oder mehrerer Netzkomponenten desselben, wobei das Computerprogrammprodukt umfasst: ein auf einem Speichermedium gespeichertes Computerprogramm, wobei das Computerprogramm einen Programmcode umfasst, der bei Ausführung auf einem Computer oder auf einer Netzkomponente eines Telekommunikationsnetzes (100) oder auf mehreren Netzkomponenten des Telekommunikationsnetzes (100) bewirkt, dass der Computer oder die Netzkomponente des Telekommunikationsnetzes (100) oder die mehreren Netzkomponenten des Telekommunikationsnetzes (100) ein Verfahren nach einem der Ansprüche 1 bis 3 ausführen.

## Revendications

1. Procédé de mise en oeuvre de la virtualisation de fonctions réseau d'un réseau de télécommunications (100) fournissant des services de communication à des abonnés (20) du réseau de télécommunications (100),
dans lequel le réseau de télécommunications (100) comprend une partie de réseau virtualisée (110) comprenant des appareils matériels virtuels et une partie de réseau non virtualisée (120) comprenant des appareils matériels physiques, dans lequel le réseau de télécommunications (100) comprend en outre un premier ensemble d'informations de capacités (131) et un second ensemble d'informations de capacités (132), le premier ensemble d'informations de capacités (131) étant indicatif de premières capacités de la partie de réseau virtualisée (110), le second ensemble d'informations de capacités (132) étant indicatif de secondes capacités de la partie de réseau non virtualisée (120),
dans lequel, relativement à un service de communication spécial et concernant les besoins de fonctions réseau du service de communication spécial - le service de communication spécial étant demandé ou au moins pouvant être demandé par au moins un abonné (20) du réseau de télécommunications (100) -, le procédé comprend l'étape consistant à déterminer si les premières capacités et/ou les secondes capacités correspondent aux besoins de fonctions réseau du service de communication spécial, dans lequel
- dans le cas où seules les premières capacités correspondent aux besoins de fonctions réseau du service de communication spécial, le service de communication spécial est fourni par le réseau de télécommunications (100), en utilisant la partie de réseau virtualisée (110),
- dans le cas où seules les secondes capacités correspondent aux besoins de fonctions réseau du service de communication spécial, le service de communication spécial est fourni par le réseau de télécommunications (100), en utilisant la partie de réseau non virtualisée (120),
- dans le cas où les première et seconde capacités correspondent aux besoins de fonctions réseau du service de communication spécial, le service de communication spécial est fourni en utilisant l'une de la partie de réseau virtualisée (110) et de la partie de réseau non virtualisée (120), ou en partie la partie de réseau virtualisée (110) et en partie la partie de réseau non virtualisée (120),
dans lequel le procédé comprend en outre les étapes consistant à :
- stocker dans une base de données_HA des fonctionnalités et des caractéristiques des appareils matériels physiques correspondant au second ensemble d'informations de capacités (132) ;
- stocker dans une base de données_VA les fonctions réseau mises en oeuvre par les appareils virtuels correspondant au premier ensemble d'informations de capacités (131) ;
- stocker les fonctions réseau et leurs caractéristiques associées qui sont requises dans un cache_RNF de fonctions réseau requises ;
- déterminer en utilisant les bases de données HA et VA les différences de fonctionnalités entre les appareils physiques et virtuels dans une troisième étape de traitement (163), les caractéristiques associées à chaque fonction étant également enregistrées ;
- synchroniser ceci à chaque mise à jour de la base de données_VA, le résultat étant stocké dans le cache_DF ;
- utiliser le cache_RNF et le cache_DF pour déterminer - dans la cinquième étape de traitement - si l'un ou les deux des appareils matériels virtuels et physiques ont la fonctionnalité pour chaque fonction requise et les caractéristiques requises pour l'exécution du service ou de l'application du dispositif et son trafic associé.

2. Procédé selon la revendication 1, dans lequel, dans le cas où à la fois la première et la seconde capacité correspondent aux besoins de fonctions réseau du service de communication spécial, le choix de fournir le service de communication spécial en utilisant
- la partie de réseau virtualisée (110), ou
- la partie de réseau non virtualisée (120), ou
- en partie la partie de réseau virtualisée (110) et en partie la partie de réseau non virtualisée (120),
dépend d'une configuration d'affectation ou d'une décision d'affectation dans le réseau de télécommunications (100).

3. Procédé selon l'une quelconque des revendications précédentes, dans lequel les services de communication sont des services de communication mobile et/ou dans lequel les abonnés (20) du réseau de télécommunications (100) sont des abonnés mobiles (20) ou des équipements utilisateurs d'un réseau de communication mobile.

4. Réseau de télécommunications (100) pour la mise en oeuvre de la virtualisation de fonctions réseau du réseau de télécommunications (100), le réseau de télécommunications (100) fournissant des services de communication à des abonnés (20) du réseau de télécommunications (100),
dans lequel le réseau de télécommunications (100) comprend une partie de réseau virtualisée (110) comprenant des appareils matériels virtuels et une partie de réseau non virtualisée (120) comprenant des appareils matériels physiques, dans lequel le réseau de télécommunications (100) comprend en outre un premier ensemble d'informations de capacités (131) et un second ensemble d'informations de capacités (132), le premier ensemble d'informations de capacités (131) étant indicatif de premières capacités de la partie de réseau virtualisée (110), le second ensemble d'informations de capacités (132) étant indicatif de secondes capacités de la partie de réseau non virtualisée (120),
dans lequel, relativement à un service de communication spécial et concernant les besoins de fonctions réseau du service de communication spécial - le service de communication spécial étant demandé ou au moins pouvant être demandé par au moins un abonné (20) du réseau de télécommunications (100) -, le réseau de télécommunications (100) est configuré de telle sorte qu'il est déterminé si les premières capacités et/ou les secondes capacités correspondent aux besoins de fonctions réseau du service de communication spécial, dans lequel le réseau de télécommunications (100) est configuré de telle sorte que :
- dans le cas où seules les premières capacités correspondent aux besoins de fonctions réseau du service de communication spécial, le service de communication spécial est fourni par le réseau de télécommunications (100), en utilisant la partie de réseau virtualisée (110),
- dans le cas où seules les secondes capacités correspondent aux besoins de fonctions réseau du service de communication spécial, le service de communication spécial est fourni par le réseau de télécommunications (100), en utilisant la partie de réseau non virtualisée (120),
- dans le cas où les première et seconde capacités correspondent aux besoins de fonctions réseau du service de communication spécial, le service de communication spécial est fourni en utilisant l'une de la partie de réseau virtualisée (110) et de la partie de réseau non virtualisée (120), ou en partie la partie de réseau virtualisée (110) et en partie la partie de réseau non virtualisée (120),
dans lequel le réseau de télécommunications (100) est configuré pour :
- stocker dans une base de données_HA des fonctionnalités et des caractéristiques des appareils matériels physiques correspondant au second ensemble d'informations de capacités (132) ;
- stocker dans une base de données_VA les fonctions réseau mises en oeuvre par les appareils virtuels correspondant au premier ensemble d'informations de capacités (131) ;
- stocker les fonctions réseau et leurs caractéristiques associées qui sont requises dans un cache_RNF de fonctions réseau requises ;
- déterminer en utilisant les bases de données HA et VA les différences de fonctionnalités entre les appareils physiques et virtuels dans une troisième étape de traitement (163), les caractéristiques associées à chaque fonction étant également enregistrées ;
- synchroniser ceci à chaque mise à jour de la base de données_VA, le résultat étant stocké dans le cache_DF ;
- utiliser le cache_RNF et le cache_DF pour déterminer - dans la cinquième étape de traitement - si l'un ou les deux des appareils matériels virtuels et physiques ont la fonctionnalité pour chaque fonction requise et les caractéristiques requises pour l'exécution du service ou de l'application du dispositif et son trafic associé.

5. Réseau de télécommunications (100) selon la revendication 4, dans lequel le réseau de télécommunications (100) est configuré de telle sorte que, dans le cas où à la fois les premières et les secondes capacités correspondent aux besoins de fonctions réseau du service de communication spécial, le choix de fournir le service de communication spécial en utilisant
- la partie de réseau virtualisée (110), ou
- la partie de réseau non virtualisée (120), ou
- en partie la partie de réseau virtualisée (110) et en partie la partie de réseau non virtualisée (120),
dépend d'une configuration d'affectation ou d'une décision d'affectation dans le réseau de télécommunications (100).

6. Réseau de télécommunications (100) selon l'une des revendications 4 ou 5, dans lequel le réseau de télécommunications (100) est configuré de telle sorte que le premier ensemble d'informations de capacités (131) et le second ensemble d'informations de capacités (132) sont générés avant de déterminer si les premières capacités et/ou les secondes capacités correspondent aux besoins de fonctions réseau du service de communication spécial.

7. Réseau de télécommunications (100) selon l'une des revendications 4 à 6, dans lequel le réseau de télécommunications (100) est configuré de telle sorte que, en plus du premier ensemble d'informations de capacités (131) et du second ensemble d'informations de capacités (132), un ensemble d'informations de différences (134) est généré, l'ensemble d'informations de différences (134) étant indicatif des capacités de la partie de réseau virtualisée (110) non fournies par la partie de réseau non virtualisée (120), et des capacités de la partie de réseau non virtualisée (120) non fournies par la partie de réseau virtualisée (110).

8. Réseau de télécommunications (100) selon l'une des revendications 4 à 7, dans lequel le réseau de télécommunications (100) est configuré de telle sorte que, avant l'étape consistant à déterminer si les premières capacités et/ou les secondes capacités correspondent aux besoins de fonctions réseau du service de communication spécial, les besoins de fonctions réseau du service de communication spécial sont déterminés et un ensemble respectif d'informations de besoins (135) est généré.

9. Réseau de télécommunications (100) selon l'une des revendications 4 à 8, dans lequel le réseau de télécommunications (100) est un réseau de télécommunications (100) pour fournir des services de communication mobile à des abonnés mobiles (20) ou à des équipements utilisateurs d'un réseau de communication mobile.

10. Réseau de télécommunications (100) selon l'une des revendications 4 à 9, dans lequel le réseau de télécommunications (100) comprend, outre la partie de réseau virtualisée (110) et la partie de réseau non virtualisée (120), une partie de gestion de divergence (130), la partie de gestion de divergence (130) étant prévue pour assurer une gestion de divergence de virtualisation de fonctions réseau, dans lequel la partie de gestion de divergence (130) comprend le premier ensemble d'informations de capacités (131), le second ensemble d'informations de capacités (132), l'ensemble d'informations de différences (134), et l'ensemble d'informations de besoins (135).

11. Programme comprenant un code de programme lisible par ordinateur qui, lorsqu'il est exécuté sur un ordinateur ou sur un composant de réseau d'un réseau de télécommunications (100) ou sur une pluralité de composants de réseau du réseau de télécommunications (100), amène l'ordinateur ou le composant de réseau du réseau de télécommunications (100) ou la pluralité de composants de réseau du réseau de télécommunications (100) à effectuer un procédé selon l'une des revendications 1 à 3.

12. Produit de programme d'ordinateur pour utiliser un réseau de télécommunications (100) ou un ou une pluralité de ses composants de réseau, le produit de programme d'ordinateur comprenant un programme d'ordinateur stocké sur un support de stockage, le programme d'ordinateur comprenant un code de programme qui, lorsqu'il est exécuté sur un ordinateur ou sur un composant de réseau d'un réseau de télécommunications (100) ou sur une pluralité de composants de réseau du réseau de télécommunications (100), amène l'ordinateur ou le composant de réseau du réseau de télécommunications (100) ou la pluralité de composants de réseau du réseau de télécommunications (100) à effectuer un procédé selon l'une des revendications 1 à 3.
